# EUROPEAN PATENT APPLICATION

(11) **EP 2 211 543 A1**
(43) Date of publication of application: **28.07.2010**
(21) Application number: 09000906.9
(22) Date of filing: 23.01.2009
(51) Int. Cl.: H04N 5/782

(54) **System and method for remotely managing a recording device**

(71) Applicant: Koninklijke KPN N.V., 2509 CH The Hague (NL)
(72) Inventor: Michalides, Wieke, Maria, 2561 TX The Hague (NL)
(74) Representative: Wuyts, Koenraad Maria

(57) **Abstract**

A method and system for remotely managing a recording device (102) from a mobile device (108) or personal computer (106). The method includes obtaining stored content information from the recording device (104) relating to content stored on the recording device and sending the stored content information via the internet and/or mobile network to the mobile device (108) or PC (106); obtaining content broadcast information from a content broadcast information provider and sending the content broadcast information via the internet (130) and/or mobile network (132) to the mobile device (108) or PC (106); selecting content, using the mobile device or PC, for recording on the recording device (104) and sending content selection information from the mobile device via the mobile network to a recording device manager (140); sending an instruction from the recording device manager (140) to the recording device (104) for recording of the selected content; and obtaining the selected content from a content provider, and sending the content via a broadcast network (112) to the recording device (104).

## Description

### FIELD OF THE INVENTION

The invention relates to a system and method of remotely managing a recording device, and more particularly to a system and method for programming a recording device via the internet or mobile internet, using a mobile device or personal computer.

### BACKGROUND OF THE INVENTION

With the advent of recording devices capable of recording television programs and other audio-visual content onto hard disks, it has become necessary to manage the content stored on the recording device. For recording television broadcasts, such recording devices can typically be programmed in advance to record programs when they are broadcast and store them until the user has opportunity to view them. However, the hard disk of such recording devices will eventually be filled with recorded programs unless programs are deleted to make storage capacity available for new programs. This problem is exacerbated by new high definition digital television broadcasts which require more storage space, and by optional features on some recording devices permitting the user to schedule repeat recordings of a program (for example, recording a 10:00pm news broadcast every evening).

When a user wishes to program the recording device to record a program, it is useful to know if there is sufficient spare capacity on the hard disk to accommodate the new recording. If there is not sufficient spare capacity, the user can choose among the programs already stored on the recording device to select a program to delete. A recording device will typically include facilities for displaying a list of the stored programs on a television, and deleting programs selected by the user. If the user has difficulty choosing which program to delete, the user can play a portion of the stored program to aid in making the decision.

However, this process requires that the user is present at the same location as the recording device to operate the device using a remote control or control buttons on the device. If the user is in a remote location and remembers that a program is scheduled for broadcast that the user wants to record, the user cannot program the recording device to record the program from the remote location.

### BRIEF SUMMARY OF THE INVENTION

The present invention aims to provide a solution to this problem by providing a method and system for remotely managing a recording device, where the method includes obtaining stored content information from the recording device, the information relating to content stored on the recording device, and sending the stored content information via a first network to the mobile device or computer; obtaining content broadcast information from a content broadcast information provider and sending the content broadcast information via the first network to the mobile device or computer; selecting content, using the mobile device or computer, for recording on the recording device and sending content selection information from the mobile device via the first network to a recording device manager; sending an instruction from the recording device manager to the recording device for recording of the selected content; and obtaining the selected content from a content provider, and sending the content via a broadcast network to the recording device.

The first network may include the internet and/or a mobile network. The stored content information may include information describing the content stored on the recording device, and may include information relating to the currently available storage capacity of the recording device and/or information relating to the available storage capacity of the recording device taking into account content already stored on the recording device and content scheduled for recording. The content broadcast information may include a television program guide information from an electronic program guide information provider.

The method may further include sending, from the recording device manager to the mobile device or computer, information relating to content already scheduled for recording but not yet recorded on the recording device. The instruction for recording may be sent from the recording device manager to the recording device via an internet connection, and it may be sent from the recording device manager to the recording device via the broadcast network.

The method may also include selecting content to preview using the mobile device or computer, obtaining content preview information from a content provider for the selected content, and sending the content preview information via the first network to the mobile device or computer. The selection of content to preview may be made on the mobile device or computer from the stored content information from the recording device.

In another aspect, the invention comprises a system for remotely managing a recording device from a mobile device or computer via a first network. The system comprises means for obtaining stored content information from the recording device, the information relating to content stored on the recording device; means for sending the stored content information via the first network to the mobile device or computer; means for obtaining content broadcast information from a content broadcast information provider; means for sending the content broadcast information via the first network to the mobile device or computer; means for selecting content, using the mobile device or computer, for recording on the recording device; means for sending content selection information from the mobile device or computer via the first network to a recording device manager; means for sending an instruction from the recording device manager to the recording device for recording of the selected content; means for obtaining the selected content from a content provider; and means for sending the content via a broadcast network to the recording device.

In the system, the first network may include the internet and/or a mobile network. The system may also include means for selecting content to preview using the mobile device or computer; means for obtaining content preview information from a content provider for the selected content; and means for sending the content preview information via the first network to the mobile device or computer.

In a further aspect, the invention comprises a recording device manager for remotely managing a recording device from a mobile device. The recording device manager includes means for obtaining stored content information from the recording device, the information relating to content stored on the recording device; means for sending the stored content information via a first network to the mobile device or computer; means for enabling selection of content by the mobile device or computer for recording on the recording device; means for receiving content selection information from the mobile device or PC via the first network; and means for sending an instruction to the recording device for recording of the selected content.

The first network may include the internet and/or a mobile network. The recording device manager may include a user profile for displaying the stored content information and content selection information on the mobile device or computer, and the user profile may provide facilities for viewing, on the mobile device or computer content selected from the stored content information.

### BRIEF DESCRIPTION OF THE DRAWINGS

Various aspects of the invention will be further explained with reference to embodiments shown in the drawings wherein:

FIG. 1 is a simplified schematic overview of an embodiment of a system for remotely managing a recording device;

FIG. 2 is an example of a User Profile display for use in the system of FIG. 1; and

FIGs. 3A, 3B, and 3C are examples of User Profile displays for a mobile device for use in the system of FIG. 1.

### DESCRIPTION OF ILLUSTRATIVE EMBODIMENTS

The following is a description of various embodiments of the invention, given by way of example only and with reference to the drawings.

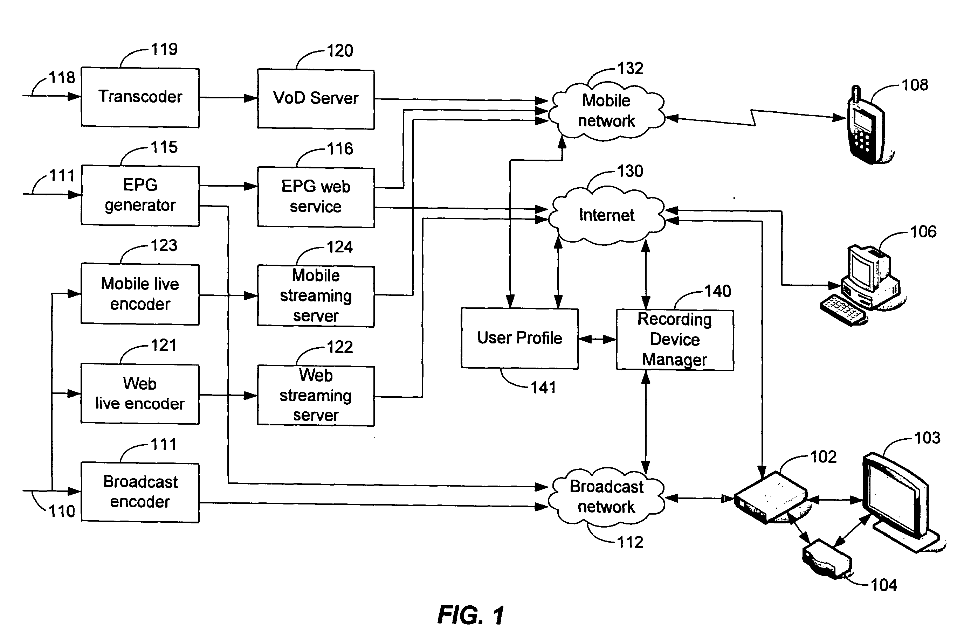

FIG. 1 shows a simplified schematic drawing of an embodiment of a system for remotely managing a recording device. A content provider supplies content 110 to a broadcast encoder 111. The content 110 may be audio-visual content such as a movie, music, television program, radio programming or other types of information or data. The content may then be encoded if necessary in the broadcast encoder 111 to put the content into a suitable format for transmission to the intended viewers (also referred to as users in this description). The encoded content is then transmitted to the users via the broadcast network 112. The transmission may take the form of a broadcast via cable or terrestrial over-the-air transmission or satellite transmission, via an analog signal (for example encoded using NTSC, PAL or SECAM analog encoding) or a digital signal. The transmission may also be a multicast, unicast, datacast, file download, or streaming transmission. For simplicity, the term "broadcast" is used in this description to encompass all of these different types of transmissions unless indicated otherwise.

For digital audio-visual signals, the broadcast is typically received by a user using a set-top box (STB) 102 connected to a television 103 and a video recorder 104. For analog audio-visual signals, the broadcast is typically received directly by the user's television 103 and/or video recorder 104. The transmission may also be received by a personal computer or media center 106, or other type of recording, storage or playing device. The STB 102 performs unscrambling, decoding and conversion of the broadcast signal to generate a signal suitable for input to the television and the video recorder. The video recorder 104 may be a hard disk-based recorder for recording of the broadcast signals, or may be designed for recording onto removable a medium such as a DVD recorder, VCR, etc. The video recorder 104 is illustrated as a separate device, but it may be integrated into the STB 102 or television 103, or all three devices may be integrated into a single unit. The video recorder is typically located in the user's premises, local to the STB and television, but it may be located remotely, for example as a networked storage device. The STB, video recorder, and television are typically controlled by a remote control and/or from controls mounted on the front of the respective units. The user can thus program the video recorder (and adjust settings on the STB and/or television if necessary) to record a certain transmission at a certain time using the remote control or the device's control buttons.

A content provider or aggregator typically also provides information 114 regarding the scheduled times for broadcast transmissions. This information may be used to generate an Electronic Program Guide (EPG), for example using EPG generator 115, to inform users of scheduled broadcasts. The EPG may then be sent to the broadcast network 112 for broadcast to the users The EPG facilitates the programming of the video recorder to record a certain transmission in advance of the time when it is scheduled to be transmitted, but must be done in the user's home or premises where the recorder is located.

The content 110 and scheduling information 114 may also be provided via the internet to the user's personal computer or media center 106. For this purpose, the content 110 may be first encoded by a web live encoder 121 and transmitted by web streaming server 122 over the internet 130, or alternatively by file download, to the user's computer/media center 106. The content may be a live channel, and the encoding performed by a live encoder and streaming by a live streaming server 122. The content may also be content that was previously stored in audio-visual (A/V) storage, transcoded into suitable format and streamed via a video-on-demand (VoD) server. Content encoded for transmission via the internet, particularly audio-visual content, is typically lower resolution than broadcast quality content intended for transmission via the usual television cable, terrestrial, or satellite broadcast. This is particularly true for high definition television content.

The user may view or listen to the content using the personal computer or media center 106, or transfer the content for viewing on the television 103 or other device. The user may also use computer/media center 106 to record the content onto a hard disk, removable media such as a DVD or CD, onto a networked storage device, or transfer the content for recording using some other recording device. The EPG may also be provided by the EPG web service 116 via the internet 130 to the user's computer/media center 106. In this way the user can view the scheduling information, select content to view, and record and schedule recording of broadcast content using computer/media center 106, as an alternative to using the STB/recorder/television receiving content over the broadcast network. The computer/media center 106 may be programmed in advance to record a certain transmission, but as before, this must usually be done in the user's home or premises where the computer/media center is located.

Content 110 and scheduling information 114 may also be made available for viewing on a user's mobile device 108, such as a mobile phone, personal digital assistant (PDA), or laptop computer. For this purpose, the content 110 may be first encoded by a mobile live encoder 123 and transmitted by mobile streaming server 124 over a mobile network 132, or alternatively by file download, to the user's mobile device 108. As noted above, the content can be a live channel, encoded by a live encoder and streamed by a live streaming server 124. The content may also be content that was previously stored in A/V storage, transcoded into mobile format, and streamed via a VoD server 120. Similarly to the internet, content encoded for transmission over a mobile network is typically encoded in a smaller format to match with the specific requirements for watching A/V content on a mobile device (e.g. requirement relating to battery consumption, screen size, processor capabilities etc.) Furthermore, the lower bandwidth and variable transmission conditions typical of mobile networks may result in lower quality picture or sound and interruptions in viewing of audio-visual content such as movies, television programs, or music when using this method.

Another option for viewing content on mobile device 108 is to encode content already recorded by computer/media center 106 or video recorder 104 so that it is suitable for viewing on the mobile device. The recorded content may be encoded and then stored onto a memory card compatible with the mobile device, and the content viewed when the memory card is connected to the mobile device. However, this is time consuming and requires advance planning in order to see recorded content on the mobile device, and it requires an encoding device. Alternatively, the recorded content may be uploaded from the computer/media center 106 or video recorder 104 to a networked device for encoding and streaming to the mobile device. This has the disadvantages of being a complicated procedure, difficult to initiate from the mobile device, and reliant on upload bandwidth which is typically less than the user's download bandwidth.

The EPG may also be provided to the user's mobile device 108 by the EPG web service 116 via the mobile network 132, or via the internet to the user's personal computer (PC) 106. For example, this enables a user to use an internet browser on the mobile device 108 or PC 106 to navigate to the EPG web service to view the EPG. Previews of upcoming broadcasts can also be made available for viewing on the user's mobile device or PC. Previews 118 are encoded in the transcoder 119 and published on the video-on-demand (VoD) server 120, for sending to the mobile device via the mobile network 132.

Such a preview may be a sample of the content or prepackaged promotional content of a broadcast that has not yet taken place. It may also be a sample (or promotional content) of content that has already been recorded on the recording device. The user can preview this recorded content via the internet (from the user's mobile or PC) if the content is available in the network in A/V storage. This may be achieved by capturing the content during the broadcast. When a user requests a certain content item, this can, for example, be streamed to the user using a unicast stream from a VoD server 120. The content can be made suitable for distribution over the internet and mobile internet by transcoding using a transcoder 119. However, although the user can view the schedule for broadcast of content on mobile device 108, and can see previews of upcoming broadcasts, there are no facilities provided for the user to program the recording device (whether the recording device is the video recorder 104 or a personal computer or media center 106) to record an upcoming broadcast.

In the embodiment of the invention shown in FIG. 1, a Recording Device Manager (RDM) 140 and User Profile 141 are provided for enabling control and management of the recording device (video recorder 104 and/or the computer/media center 106) using a remote device (e.g. user's mobile 108, or PC 106 operating as a control device rather than as a recording device such as a media center). The remote device communicates with the RDM via an internet connection and/or via a mobile network (when a wireless remote device is used for control). The following description focuses on the interaction of the RDM 140 and User Profile 141 with the video recorder 104, although they may also function in the same way to control and manage the computer/media center 106.

The RDM 140 communicates with the video recorder 104, typically through the STB 102. This may be accomplished via an internet connection to the recording device or STB, via a telephone line or a cable TV connection (e.g. where the internet connection and cable TV broadcast share the same cable).

The RDM can access data stored on the recording device, and can issue instructions to the recording device. For example, the RDM can access data relating to the programs recorded by the recording device, such as title of the program, TV channel the program was broadcast on, and time and date of broadcast or recording, duration of the program, and other data relating to the program. The RDM may also include an interface to the broadcast service, for example via the broadcast network 112, for information exchange between the provider and RDM, for example regarding the metadata/content source addressing on the recording device.

The instructions from the RDM to the recording device may include an instruction to record a certain program, for example by specifying the program name or identifying data, or the broadcast channel and time for the program. The RDM may also instruct the recording device to turn on or off, delete a program already recorded, block viewing of a recorded program, or perform any other functions normally controlled by the recording device's remote control or front panel controls.

Communication between the RDM 140 and the video recorder 104 may be accomplished using standardized commands sent using http protocol or the like. In this case, the recording device should include facilities to interpret the standardized commands from the RDM. Alternatively, the RDM may interrogate the recording device to ascertain the type of device it is, for example the manufacturer and model number, or type of commands it will accept. The RDM can then utilize the correct set of commands according to the type of recording device detected, so that the two units can communicate with each other.

A User Profile 141 may be provided as the user's interface with the RDM 140. The User Profile comprises a database of information relating to the user and the user's video recorder 104. The user interacts with the User Profile to enable the user to schedule the recording of upcoming broadcast content, review what content is currently stored on the recording device, delete recorded content, and take other actions to manage the recording device and the user's recordings.

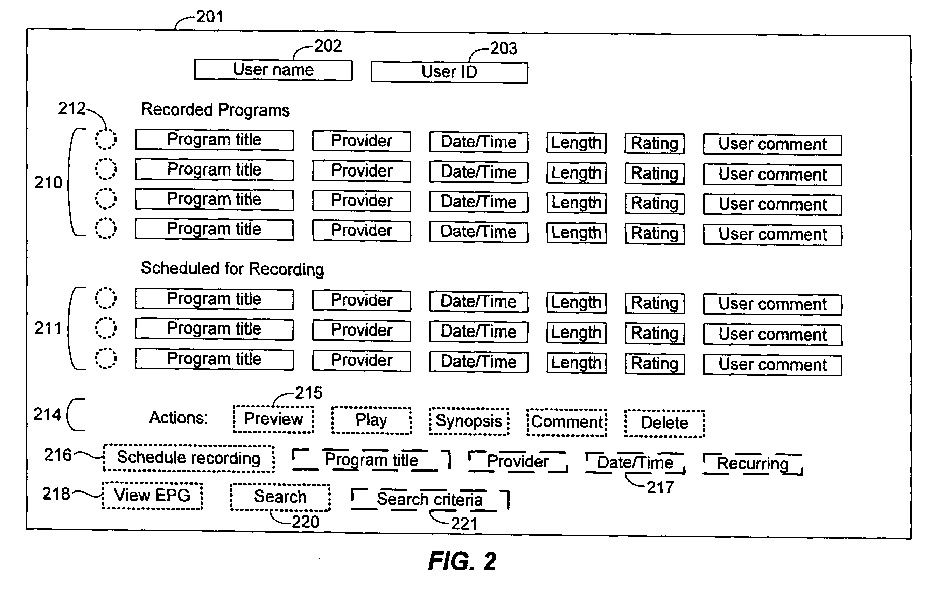

FIG. 2 illustrates an example of a display 201 for the User Profile 141. The user may use mobile device 108 or personal computer to view their personalized User Profile display. This is preferably achieved using an internet browser on the mobile device or personal computer to navigating to a web page where the User Profile is displayed. The display may include the user's name 202 and an identity 203 assigned to the user, such as a customer number. The User Profile preferably includes facilities to view information relating to content that has already been recorded by the video recorder 104 and content that has been scheduled for recording in the future, and to manage the recorded content and scheduled content.

A list of recorded programs 210 may be displayed, including information such as the program title, the name of the content provider (e.g. the name of the television channel on which the program was broadcast), the date and time the program was broadcast, the length of the program, and other relevant information about the program that may be of interest to the user. This may include, for example, a rating relating to suitability of the program for different types of viewers (e.g. ratings related to violent content, suitability for young viewers, etc.), and other such information. An area may also be provided on the display for showing a comment or rating entered by the user relating to the respective program.

A list of scheduled program recordings 211 may also be displayed, providing information regarding the programs that have been scheduled for recording at a future time. The same type of information may also be provided for these scheduled programs as for the programs that have already been recorded.

An icon 212 for selecting one of the recorded programs or scheduled programs may be provided to permit the user to issue an instruction regarding the selected program. The user selects an icon 212 adjacent the relevant program, and then selects the desired command 214 by selecting one of the command icons 215. These may include, for example, an instruction to play a short preview of the selected program, to play the entire selected program, to view a short synopsis of the program (e.g. derived from the EPG), to permit the user to enter a comment relating to the program, or to delete program (e.g. delete a recorded program from the recording device, or delete a program from the list of scheduled recordings for a program that has not yet been recorded).

An icon 216 may also be provided to add a new program to the list of programs scheduled for recording. After selecting the icon 216, the user may enter the relevant data in the data entry fields 217 to specify the program title, content provider (e.g. television channel the program will be broadcast on), data and time when the program will be broadcast, whether the program should be recorded only once at the time indicated or the same program should be recorded each time a new episode is broadcast, and any other data required. An icon 218 may also be provided for access to the EPG web service 116 so that the user can view the broadcast schedule. The User Profile may be linked directly to the EPG web service to permit the user to select a program while viewing the EPG and have the program automatically added to the list of scheduled recordings 211. An icon 220 and data entry field 221 may also be provided for performing a search for a program which the user wants to record. The search may be made in the EPG only, or more generally on the internet, for any programs matching the search criteria entered by the user. This criteria may include, for example, words appearing in the program title, a certain type of program (e.g. sports, news, documentary, etc.), a certain content provider, or other relevant criteria.

Additional information may also be provided by the User Profile, such as the number of recorded programs stored on the video recorder 104, the amount of spare storage capacity in the video recorder 104, and the amount of spare storage capacity taking into account the programs already scheduled for recording that have not yet been recorded.

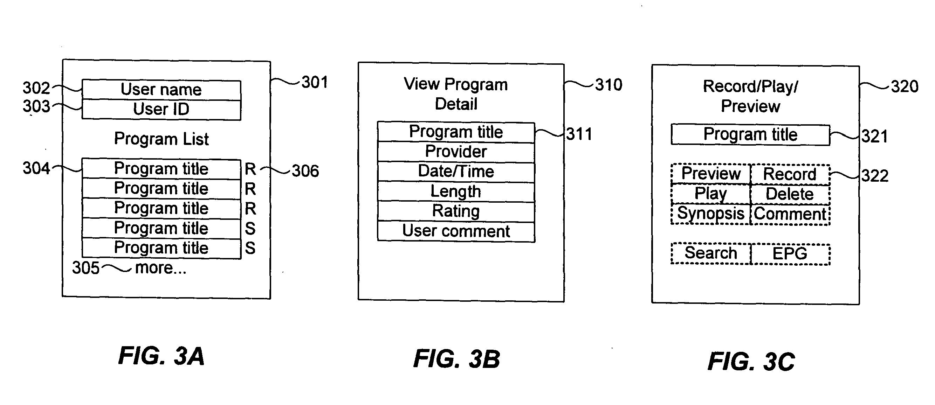

The User Profile display shown in FIG. 2 is laid out in a format that may be suitable for viewing from a personal computer or mobile device with a large screen, but may be unsuitable for display on a smaller screen typically present on a mobile phone or PDA. FIGs. 3A, 3B and 3C illustrate a series of displays providing equivalent functionality as the display of FIG. 2, but configured for viewing on a smaller display screen. FIG. 3A illustrates an example of a more compact User Profile display 301 for these types of devices. The display 301 includes a portion of the same elements shown in FIG. 2, such as the user's name 302 and identity 303, and a list of program titles 304 that have been recorded or scheduled for recording. An icon 305 is provided to scroll through the list of programs to view the entire list. An indicator 306 may be provided to indicate those programs which have been recorded and those which are scheduled for recording, or alternatively separate list could be provided.

Another display 310 is shown in FIG. 3B for viewing details for a recorded or scheduled program 311, similar to those discussed in relation to FIG. 2. Display 320 shown in FIG. 3C permits the user to enter data to schedule the recording of new program, or to take actions relating to any of the recorded or scheduled programs. Icons 322 are provided to initiate viewing of a preview of a selected program 321, viewing the entire program, deleting the program from the recording device or list of scheduled programs, viewing a synopsis of the program, viewing or entering a comment relating to the program, or for access to the EPG.

The user can use the User Profile 141 and RDM 140 to more efficiently manage the recording device from the user's mobile device 108 or PC 106. The user can see what programs are stored on the recording device using the User Profile as described above. The RDM obtains information regarding the stored programs from the recording device and displays this information to the user via the User Profile displays.

The user can then chose to see a preview of any of the stored programs, watch the stored program, or see information about a stored program (such as a review or a synopsis). If the user chooses to view a preview of the stored program, this is provided to the user's mobile device or PC directly from the VoD server 120, rather than from the recording device. Similarly, if the user chooses to watch the stored program, this is provided to the user's mobile device directly from the VoD server 124, rather than from the recording device. Note that the server 120 and 124 may be the same.

When a user wants to preview content that has already been broadcast and stored, the preview will come from a VoD server instead of a live (mobile or internet) streaming server. This avoids requiring the relevant data to be uploaded from the recording device so that it can be sent to the mobile device. This is advantageous because upload speeds for home internet service are typically slow, and many recording devices may not support uploading of stored programs. It also avoids the need for a streaming server local to the recording device, to convert the recorded program for streaming to the user's mobile device, and it avoids the need to have such a streaming server powered up and running and controlled remotely.

If the user chooses to see information about a stored program such as a review or a synopsis, this may be obtained by the User Profile from the EPG web service or other internet web site.

The user can also schedule a program for recording. The user can search for a program, using the EPG or by entering search criteria to find a program. The user can select a preview for a program to verify that it is of interest to the user, and the requested preview is streamed to the user's mobile device or PC from the VoD server 120. Because the user can see what is currently stored on the recording device, the user can verify that there is sufficient capacity remaining to record the new program, and can delete stored programs to free up storage capacity if necessary. By using the preview and play options for the stored programs, the user can make a more informed selection of which stored programs to delete to make room for new programs.

The invention has been described by reference to certain embodiments discussed above. It will be recognized that these embodiments are susceptible to various modifications and alternative forms well known to those of skill in the art without departing from the spirit and scope of the invention. Accordingly, although specific embodiments have been described, these are examples only and are not limiting upon the scope of the invention, which is defined in the accompanying claims.

## Claims

1. A method for remotely managing a recording device from a mobile device or computer, comprising:
obtaining stored content information from the recording device, the information relating to content stored on the recording device, and sending the stored content information via a first network to the mobile device or computer;
obtaining content broadcast information from a content broadcast information provider and sending the content broadcast information via the first network to the mobile device or computer;
selecting content, using the mobile device or computer, for recording on the recording device and sending content selection information from the mobile device via the first network to a recording device manager;
sending an instruction from the recording device manager to the recording device for recording of the selected content; and
obtaining the selected content from a content provider, and sending the content via a broadcast network to the recording device.

2. The method of claim 1, wherein the first network comprises the internet.

3. The method of claim 1 or claim 2, wherein the first network comprises a mobile network.

4. The method of any one of the preceding claims, wherein the stored content information comprises information describing the content stored on the recording device.

5. The method of any one of the preceding claims, wherein the stored content information comprises information relating to the currently available storage capacity of the recording device.

6. The method of any one of the preceding claims, wherein the stored content information comprises information relating to the available storage capacity of the recording device taking into account content already stored on the recording device and content scheduled for recording.

7. The method of any one of the preceding claims, wherein the content broadcast information comprises television program guide information from an electronic program guide information provider.

8. The method of any one of the preceding claims, further comprising sending, from the recording device manager to the mobile device or computer, information relating to content already scheduled for recording but not yet recorded on the recording device.

9. The method of any one of the preceding claims, wherein the instruction for recording is sent from the recording device manager to the recording device via an internet connection.

10. The method of any one of the preceding claims, wherein the instruction for recording is sent from the recording device manager to the recording device via the broadcast network.

11. The method of any one of the preceding claims, further comprising selecting content to preview using the mobile device or computer, obtaining content preview information from a content provider for the selected content, and sending the content preview information via the first network to the mobile device or computer.

12. The method of claim 9, wherein the selection of content to preview is made on the mobile device or computer from the stored content information from the recording device.

13. A system for remotely managing a recording device from a mobile device or computer via a first network, comprising:
means for obtaining stored content information from the recording device, the information relating to content stored on the recording device;
means for sending the stored content information via the first network to the mobile device or computer;
means for obtaining content broadcast information from a content broadcast information provider;
means for sending the content broadcast information via the first network to the mobile device or computer;
means for selecting content, using the mobile device or computer, for recording on the recording device;
means for sending content selection information from the mobile device or computer via the first network to a recording device manager;
means for sending an instruction from the recording device manager to the recording device for recording of the selected content;
means for obtaining the selected content from a content provider; and
means for sending the content via a broadcast network to the recording device.

14. The system of claim 13, wherein the first network comprises the internet.

15. The method of claim 13 or 14, wherein the first network comprises a mobile network.

16. The system of any one of claims 13-15, further comprising:
means for selecting content to preview using the mobile device or computer;
means for obtaining content preview information from a content provider for the selected content; and
means for sending the content preview information via the first network to the mobile device or computer.

17. A recording device manager for remotely managing a recording device from a mobile device, comprising:
means for obtaining stored content information from the recording device, the information relating to content stored on the recording device;
means for sending the stored content information via a first network to the mobile device or computer
means for enabling selection of content by the mobile device or computer for recording on the recording device;
means for receiving content selection information from the mobile device or PC via the first network; and
means for sending an instruction to the recording device for recording of the selected content.

18. The recording device manager of claim 17, wherein the first network comprises the internet.

19. The recording device manager of claim 17 or 18, wherein the first network comprises a mobile network.

20. The recording device manager of any one of claims 17-19, further comprising a user profile for displaying the stored content information and content selection information on the mobile device or computer.

21. The recording device manager of any one of claims 17-20, wherein the user profile provides facilities for viewing, on the mobile device or computer content selected from the stored content information.
